(19) Europäisches Patentamt
European Patent Office
Office européen des brevets

(11) **EP 2 395 472 B1**

(12) **EUROPEAN PATENT SPECIFICATION**

(45) Date of publication and mention
of the grant of the patent:
**01.05.2019 Bulletin 2019/18**

(51) Int Cl.:
***G06T 1/60*** (2006.01)

(21) Application number: **10165686.6**

(22) Date of filing: **11.06.2010**

(54) **Image processing system and address generator therefor**

Bildverarbeitungssystem und Adressengenerator dafür

Système de traitement d'images et son générateur d'adresses

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**14.12.2011 Bulletin 2011/50**

(73) Proprietor: **Mobileye Vision Technologies Ltd.
Jerusalem 9777513 (IL)**

(72) Inventors:
• **Kreinin, Yosef
93585, Jerusalem (IL)**
• **Dogon, Gil
95746, Jerusalem (IL)**
• **Sixsou, Emmanuel
97823, Jerusalem (IL)**
• **Arbeli, Yosi
53482, Givataim (IL)**
• **Navon, Mois
90435, Efrat (IL)**
• **Sajman, Roman
90917, Givat Zeev (IL)**

(74) Representative: **Jehan, Robert
Williams Powell
Staple Court
11 Staple Inn Buildings
London, WC1V 7QH (GB)**

(56) References cited:
**WO-A1-2008/050256     WO-A2-03/100600
WO-A2-03/100600         US-A- 4 338 660
US-A1- 2003 188 125     US-B1- 7 088 872**

• **MATHEW B ET AL: "A loop accelerator for low power embedded VLIW processors", HARDWARE/SOFTWARE CODESIGN AND SYSTEM SYNTHESIS, 2004, INTERNATIONAL CONFERENCE ON STOCKHOLM, SWEDEN SEPT. 8-10, 2004, PISCATAWAY, NJ, USA,IEEE, 8 September 2004 (2004-09-08), pages 6-11, XP010743596,**
• **TANIGUCHI I: "Reconfigurable AGU: An Address Generation Unit Based on Address Calculation Pattern for Low Energy and High Performance Embedded Processors", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E92A, no. 4, 1 April 2009 (2009-04-01), pages 1161-1173, XP001547211,**
• **YAMASAKI K ET AL: "External memory bist for system-in-package", TEST, 2005 IEEE INTERNATIONAL CONFERENCE ON NOV. 8, 2005, IEEE OPERATIONS CENTER, US, 8 November 2005 (2005-11-08), pages 1145-1154, XP010888333,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

1. TECHNICAL FIELD

The present invention relates to an image processing system and specifically to an address generator used to calculate addresses so that multiple image frames or windows are processed in parallel.

2. DESCRIPTION OF RELATED ART

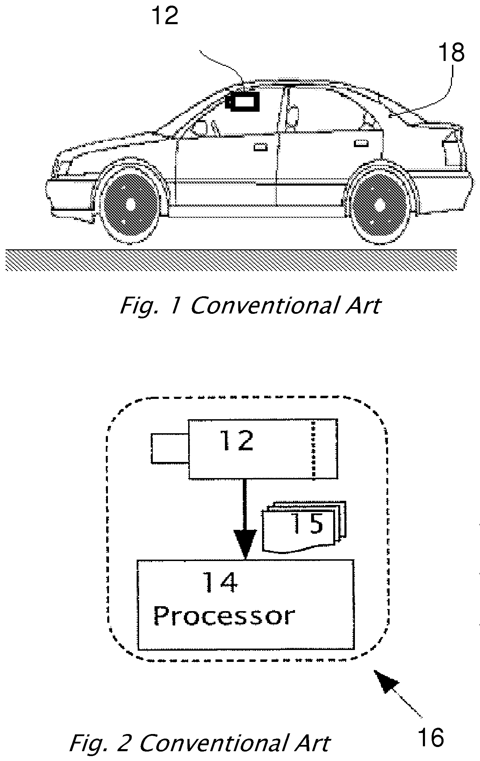

Reference is made to Figure 1 (conventional art) and Figure 2 (conventional art) which illustrate a system **16** including a camera or image sensor **12** mounted in a vehicle **18** imaging a field of view in the forward or rear direction. Image sensor **12** typically delivers images in real time and the images are captured in a time series of image frames **15**. An image processor **14** is used to process image frames **15** for processing by one or more driver assistance systems.

Driver assistance systems include forward collision warning systems, lane departure warning systems, traffic sign recognition (TSR) and headlight control systems.

Lane departure warning (LDW) systems are designed to give a warning in the case of unintentional lane departure. The warning is given when the vehicle crosses or is about to cross the lane marker. Driver intention is determined based on use of turn signals, change in steering wheel angle, vehicle speed and brake activation. There are various LDW systems available. One algorithm for lane departure warning (LDW) used by the assignee/applicant of the present application (Mobileye Technologies Ltd., Nicosia, Cyprus, hereinafter "Mobileye") is predictive in that it computes time to lane crossing (TLC) based on change in wheel-to-lane distance and warns when the time-to-lane crossing (TLC) is below a certain threshold. Other algorithms give a warning if the wheel is inside a certain zone around the lane marker. In either case, essential to the lane departure warning system is the lane marker detection algorithm. Typically, the lane markers are detected in the camera image and then, given the known camera geometry and camera location relative to the vehicle, the position of the vehicle relative to the lane is computed. The lane markers detected in the camera image are then collected over time, for instance using a Kalman filter. Wheel-to-lane marker distance may be given with an accuracy of better than 5 centimeters. With a forward looking camera, wheel-to-lane marker distance is not observed directly but is extrapolated from the forward view of the camera. The closer road markings are observed, less extrapolation is required for determining wheel-to-lane marker distance and more accurate estimates of wheel-to-lane marker distance are achieved, especially along curves of the road. Due to the car bonnet (hood) and the location of the camera, the road is seldom visible closer than six meters in front of the wheels of the car. In some cars with longer bonnets, the road visible in front of the wheels of the car is even less. Typically the lane departure warning system of Mobileye works on sharp curves (with radius down to 125m). With a horizontal field of view (FOV) of 39 degrees of the camera, the inner lane markers are still visible on curves with a radius down to 125 meters. In order to perform correctly lane assignment on curves, lane markings are detected at 50 meters and beyond. With a horizontal field of view (FOV) of 39 degrees for the camera, a lane mark of width 0.1 meters at 50m distance corresponds in the image plane to just under two pixels wide and can be detected accurately. The expectation from the lane departure warning systems is greater than 99% availability when lane markings are visible. Expectation with 99% availability is particularly challenging to achieve in low light conditions when the lane markings are not freshly painted (have low contrast with the road) and the only light source is the car halogen headlights. In low light conditions, the lane markings are only visible using the higher sensitivity of the clear pixels (i.e. using a monochrome sensor or a red/clear sensor). With the more powerful xenon high intensity discharge (HID) headlights, it is possible to use a standard red green blue (RGB) sensor in most low light conditions.

The core technology behind forward collision warning (FCW) systems and headway distance monitoring is vehicle detection. Assuming reliable detection of vehicles in a single image, a typical forward collision warning (FCW) system requires that a vehicle image be 13 pixels wide, then for a car of width 1.6m, a typical camera gives initial detection at 115m and multi-frame approval at 100m. A narrower horizontal field of view (FOV) for the camera gives a greater detection range. However, the narrower horizontal field of view (FOV) will reduce the ability to detect passing and cutting-in vehicles. A horizontal field of view (FOV) of around 40 degrees was found by Mobileye to be almost optimal (in road tests conducted with a camera) given the image sensor resolution and dimensions. A key component of a typical forward collision warning (FCW) algorithm is the estimation of distance from a single camera and the estimation of scale change from the time-to-contact/collision (TTC) as disclosed for example in US patent 7,113,867.

Traffic sign recognition (TSR) modules are typically designed to detect speed limit signs and end-of-speed limit signs on highways, country roads and urban settings. In addition, iconic supplemental signs (e.g. rain, on exit (arrow), trailer) are typically detected and identified. Partially occluded, slightly twisted and rotated traffic signs are preferably detected. Systems implementing traffic sign recognition (TSR) may or should ignore the following signs: signs on truck/buses, exit road numbers, minimum speed signs, and embedded signs. A traffic sign recognition (TSR) module which focuses on speed limit signs does not have a specific detection range requirement because speed limit signs only need to be detected before they leave the image. An example of a difficult traffic sign to detect is a 0.8 meter diameter traffic sign on the side of the road when the vehicle is driving in the center lane of a three lane highway. Further details of a TSR system is disclosed by the present assignee in United States patent publication number US 2008/0137908 (application serial number 11/951,405).

A typical automatic headlight or high/low beam control (AHC) system detects the following conditions and switches from high beams to low beams: headlights of oncoming vehicles, taillights of preceding vehicles, street lights or ambient light indicating that high beams are not required and a low vehicle speed. The host vehicle lights are switched back to high beams when none of these conditions exists (often after a specified given or grace period). One approach for detecting taillights is to compare images from two sensors: one with a red filter and the second with a cyan filter. The cyan filter responds to non-red light sources and will give zero response to red light. By comparing corresponding pixels from two imaging sensors one can detect the color of the light source. The number of pixels of each color above a certain intensity is counted and if the count is above a threshold the systems switches to low beams. The use of color filters with imaging sensors may preclude the simultaneous use of the same image frames for other driver assistance applications.

A second approach for automatic high-beam control (AHC) uses an RGB sensor to give better color differentiation. Typical light sources can be located in the full CIE color space as defined by the International Commission on Illumination. This approach distinguishes between green, yellow and red lights. A powerful green traffic light is not confused with an oncoming vehicle. Since a single sensor with a color mosaic filter i.e. Bayer pattern mosaic is used, the lens is defocused so as to spread a light source over multiple pixels. The use of the color mosaic filter reduces both the effective image sensor resolution (by 50%) and the intensity response (to less than one third). The color mosaic filter may preclude the use of the same sensor for traffic sign recognition (TSR) or lane departure warning (LDW) because of the intensity response penalty.

Given that forward collision warning (FCW), traffic sign recognition (TSR) and lane departure warning (LDW) already require a high resolution monochrome sensor, a new automatic high-beam control (AHC) algorithm was developed for use with high resolution monochrome sensors as disclosed in US patent 7,566,851. A number of different pattern recognition techniques are used with higher resolution monochrome imaging sensors to identify light sources instead of relying on color information. The automatic high-beam control (AHC) algorithm includes the following features: detect bright spots in the sub-sampled long exposure image and then perform clustering and classification in the full resolution image; classify spots based on brightness, edge shape, internal texture; get further brightness information from the short exposure frames, and classify obvious oncoming headlights based on size and brightness; track spots over time and compute change in size and brightness; pair up matching spots based on similarity of shape, brightness and motion; classify pairs as oncoming or taillights based on distance, brightness and color; and estimate distance and where unmatched spots might be motorcycles taillights.

US patent US 8,254,635 B2 describes "bundling" or parallel processing of multiple driver assistance systems (*e.g.* automatic high-beam control (AHC) and traffic sign recognition (TSR), lane departure warning (LDW), forward collision warning (FCW)) on a single hardware platform **16**, *e.g.* camera **12** and processor **14**. Bundling provides cost reduction and may allow more driver assistance functions to be added to the vehicle without increasing the space required beyond the windshield of the vehicle.

Different driver assistance applications have different requirements from camera **12**, and associated optics. For example, a conventional automatic high-beam control (AHC) algorithm makes significant use of color information and thus requires a color sensor, while lane detection and traffic sign recognition require the extra sensitivity of a monochrome sensor for operation under low light conditions. No single gain/exposure setting is optimal for all applications and in fact, some applications (such as AHC and TSR) may each use more than one gain/exposure setting. Most driver assistance applications require processing over multiple windows of a single frame and/or multiple image frames. In some cases, image frames are partitioned between different driver assistance applications and in other cases the image frames are shared between the different driver assistance applications.

A vector processor, or array processor, is a processor that implements an instruction set containing instructions that operate on one-dimensional arrays of data called vectors. A scalar processor, in comparison, operates on a single datum. Most commonly used processors are scalar processors.

VLIW (Very Long Instruction Word) digital signal processing units contain several sub-processing units which operate in parallel. The VLIW contains multiple opcodes which direct the various sub-processing units, thus allowing for parallel processing since each sub-unit gets its opcode at the same time. An op-code is a portion of a machine language instruction that specifies an operation to be performed.

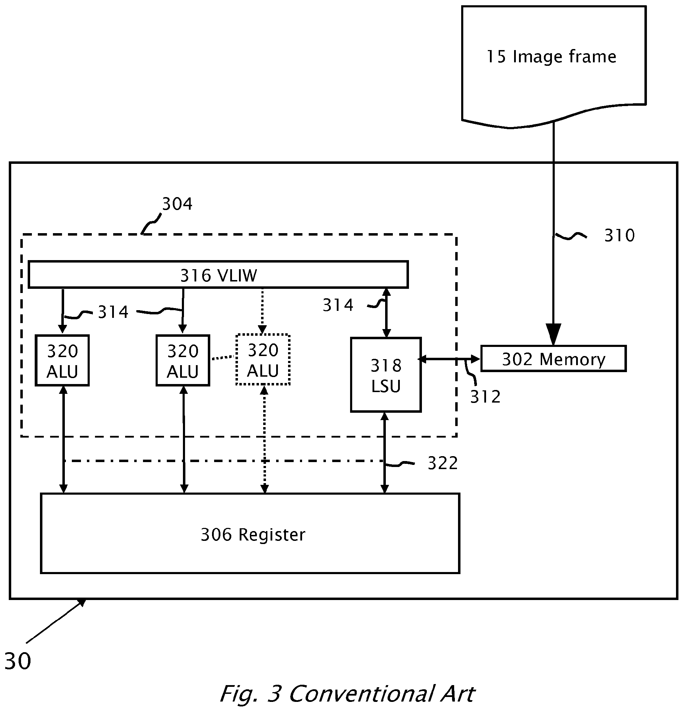

Reference is now made to Figure 3, a system block diagram for a conventional image processing system **30**. Image processing system **30** has a processor **304** connected to a register **306** via a register bus **322**. A memory **302** is connected to image sensor **12** (not shown in Fig. 3) for inputting one image frame **15** at a time via an image frame bus **310**. Processor **304** has multiple arithmetic and logic units (ALU) **320** and a load store unit LSU **318** connected to a very long instruction word (VLIW) **316** via data bus **314**. ALU **320** and a load store unit LSU **318** are connected to register **306** by register bus **322**. LSU **318** connects to and accesses memory **302** via memory bus **312**.

During operation of image processing system **30**, multiple arithmetic and logic units ALU **320** operate in parallel via op-codes (operation codes) provided by VLIW **316**. In the case of VLIW **316**, many op-codes provide multiple commands which allow parallel processing by sub-processing units ALU **320**. VLIW **316** contains address information to be used by one of ALU **320** to compute the upcoming address to be then used by LSU **318** in a subsequent cycle.

Load-storage unit (LSU **318**) is responsible for accessing memory **302**. The address for LSU **318** generally comes from register file **306** where the address is the result of a computation performed by the other sub-units. As a result, LSU **318** must wait until the necessary address is calculated. Furthermore, ALU **320** requires at least one cycle to performing the address calculation instead of performing an algorithm specific computation.

Thus there is a need for and it would be advantageous to have a hardware platform suitable to support multiple image frames and/or multiple windows for processing in parallel multiple driver assistance applications, and specifically the preferred embodiments described herein provide an address generator which calculates addresses over multiple image frames and/or multiple windows to support processing of multiple driver assistance applications using a single hardware platform. WO-2008/050256 discloses an address calculation unit for region based image processing tasks, where a processing unit processes the data and exchanges the processed data between a global memory and a local memory, wherein the address calculation of region-based algorithms is performed by the address calculation unit in parallel to the date processing of the and the actual processing of data.

MATHEW B ET AL: "A loop accelerator for low power embedded VLIW processors", HARDWARE/SOFTWARE CODESIGN AND SYSTEM SYNTHESIS, INTERNATIONAL CONFERENCE ON. STOCKHOLM, SWEDEN SEPT. 8-10, 2004, IEEE, 8 September 2004, pages 6-11, discloses a distributed address generation and loop acceleration architecture for VLIW processors is presented. This decentralized on-chip memory architecture uses multiple SRAMs to provide high intra-processor bandwidth. Each SRAM has an associated stream address generator capable of implementing a variety of addressing modes in conjunction with a shared loop accelerator.

Definitions

The term "image sensor" as used herein refers to or includes a photosensitive surface. A typical "image sensor" is electronic with a finite number of picture elements or pixels which cover an area. The "picture elements" typically have a length and width in image space.

The term "image size parameter" in the context of the present invention refers to the size of an image either in image coordinates or as accessed in memory.

The term "image parameter" refers to one or more of the image frames as stored in memory and specifies which image frame(s) to process. The term "window" as used herein refers to a locus of pixels or a number of contiguous pixels in an image frame.

The terms "parameter", "address parameter" or "addressing parameter" are used herein interchangeably and refer to both said "image size parameter" and "image parameter".

BRIEF SUMMARY

According to a feature of the present invention there is provided an image processing system including a vector processor and a memory adapted for attaching to the vector processor. The memory is adapted to store multiple image frames. The vector processor includes an address generator operatively attached to the memory to access the memory. The address generator is adapted for calculating addresses of the memory over the multiple image frames. The addresses may be calculated over the image frames based upon an image parameter. The image parameter may specify which of the image frames are processed simultaneously. A scalar processor may be attached to the vector processor. The scalar processor provides the image parameter(s) to the address generator for address calculation over the multiple image frames. An input register may be attached to the vector processor. The vector processor may include hardware to support looping code during execution, where the address generator is previously programmed with parameters of an execution loop over the image frames. The address generator may be configured to generate a break signal adapted to be received by the hardware to break execution of the looping code of the vector processor over the image frames. The image frames may be processed in parallel for multiple driver assistance applications using a single hardware platform. The input register may be adapted to receive a very long instruction word (VLIW) instruction. The VLIW instruction may be configured to transfer only: (i) operation codes for image processing calculations over the image frames by the ALU units and (ii) a single bit to the address generator. The addresses are calculated over the multiple image frames based upon at most one image size parameter which specifies a dimension of the image frames or the addresses are calculated over the multiple image frames based upon at most two image size parameters which specify a dimension of the image frames.

According to a feature of the present invention there is provided a method for processing images in a system including a vector processor and a memory. The vector processor includes an address generator attached to the memory to access the memory. The address generator is adapted for calculating addresses of the memory. The multiple image frames are stored in the memory. A VLIW instruction may be received for the parallel processing of data stored at the calculated addresses. The parallel processing may be performed by the vector processor according to the VLIW instruction. An image parameter may be loaded and read by the address generator. The loading of the image parameter may be performed externally to the VLIW instruction and the address generator receives only a single bit of the VLIW instruction to enable the calculation of addresses. The addresses of the memory may be calculated for the image frames based upon the image parameter; and the image frames are processed in parallel using the addresses. The image frames are typically stored contiguously in memory. The loading of the image parameter may be performed in a register attached to or resident in the address generator. The image parameter may specify at least two of the image frames to be processed in parallel. The calculation is based upon the image parameter including at most two image size parameters which specify the size of the image frames. The calculation may be based upon the image parameter including at most one image size parameter which specifies the size of the image frames.

According to a feature of the present invention there is provided a method for processing images in a system including a vector processor and a memory. The vector processor includes an address generator operatively attached to the memory to access the memory. The vector processor may include hardware to support looping code during execution. The address generator is adapted for calculating addresses of the memory. An image frame is stored in the memory. A window parameter is loaded and read which specifies multiple windows within the image frame. Addresses are calculated for the multiple windows within the image frame based upon the image parameter. Image data stored at the addresses are processed in parallel. The address generator may be previously programmed with parameters of an execution loop over the image frames. Based on the previous programming, a break signal may be generated. The hardware may receive the break signal, thereby breaking execution of the looping code of the vector processor over the image frames. A VLIW instruction may be received for the parallel processing of data stored at the calculated addresses. The parallel processing may performed by the vector processor according to the VLIW instruction. The loading of the window parameter is performed externally to the VLIW instruction. The address generator receives a single bit of the VLIW instruction to enable the calculation of addresses.

These, additional, and/or other aspects and/or advantages of the present invention are set forth in the detailed description which follows; possibly inferable from the detailed description; and/or learnable by practice of the present invention.

BRIEF DESCRIPTION OF THE DRAWINGS

Embodiments of the present invention are described below, by way of example only, with reference to the accompanying drawings, in which:

Fig. 1 shows a camera mounted on a vehicle according to conventional art;
Fig. 2 shows a vehicle control system according to conventional art;
Fig. 3 shows a system block diagram of an image processing system according to conventional art;
Fig. 4 shows a system block diagram of an image processing system and address generator connected according to an embodiment of the present invention;
Fig. 5 shows a flow diagram of a method using an image processing system and address generator according to an embodiment of the present invention;
Fig. 6 illustrates a method using an image processing system and address generator, according to another embodiment of the present invention;
Figure 6a shows schematically a diagram of an image frame with window 60 according to an embodiment of the present invention; and
Figure 7 illustrates a simplified block diagram of address generator according to embodiment of the present invention.

DETAILED DESCRIPTION

Reference will now be made in detail to embodiments of the present invention, examples of which are illustrated in the accompanying drawings, wherein like reference numerals refer to the like elements throughout. The embodiments are described below to explain the present invention by referring to the figures.

By way of introduction, embodiments of the present invention take advantage of the fact that image processing is being performed involving image patches of a given width and height located in a given memory. Having specific parameters known in advance of the computation-intensive image processing allows avoiding address calculations during actual image processing.

Using conventional circuitry 30 VLIW 316 contains address information to be used by ALU 320 to compute the upcoming address to be then used by the LSU 318 in a subsequent cycle. According to an embodiment of the present invention addresses are calculated as needed, and thus VLIW bits used to pass the addressing information in conventional circuitry 30 are now available for other operand information, or simply a more compact instruction word (which thus saves on program memory used to store the instructions).

According to an embodiment of the present invention, addressing parameters, e.g. width(w), height(h) in image space and origin or starting point in memory are provided and used to calculate memory addresses for multiple image frames and/or multiple windows thereby freeing up other computation sub-units for actual image processing calculations, e.g. for driver control applications.

It should be noted that embodiments of the present invention are useful for many different image processing algorithms, particularly image processing calculations and/or algorithms (including but not limited by) sum of squared differences, sum of absolute differences, median filter, Hough transform, image intensity accumulation) which process every pixel within a given image windows.

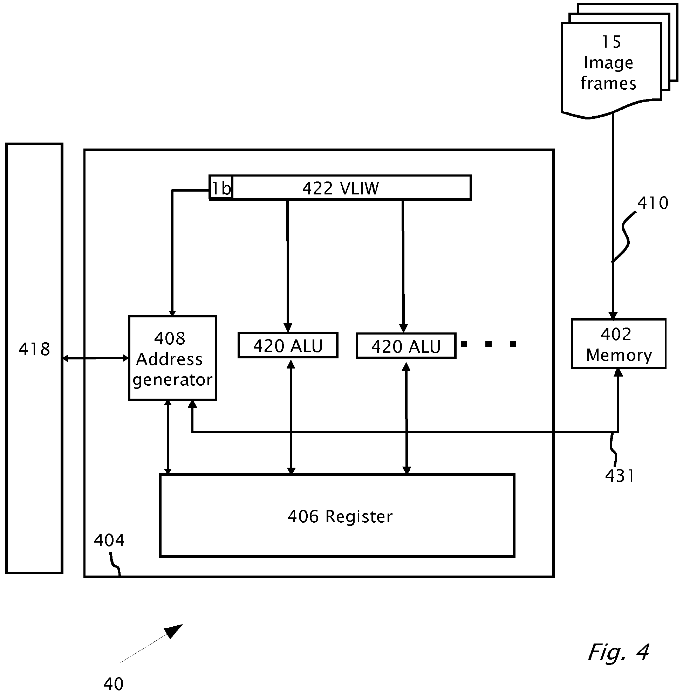

Referring now to the drawings, Figure 4 illustrates a system block diagram for an image processing system 40 according to an embodiment of the present invention. Image processing system 40 includes a vector processor 404, a memory 402 and a scalar processor 418. Memory 402 connects to an input of multiple image frames 15 via an image frame bus 410. Vector processor 404 includes multiple arithmetic logic units (ALU) 420 and an address generator 408 which connect to register 406 via their own separate buses (thus allowing simultaneous register file access). Address generator 408 connects to memory 402 with a memory bus 431. Arithmetic logic units (ALU) 420 and address generator 408 connect to a very long instruction word (VLIW) 422 via their own separate buses (thus allowing simultaneous execution of the relevant op-codes. A single bit 1b of VLIW 422 connects directly to address generator 408.

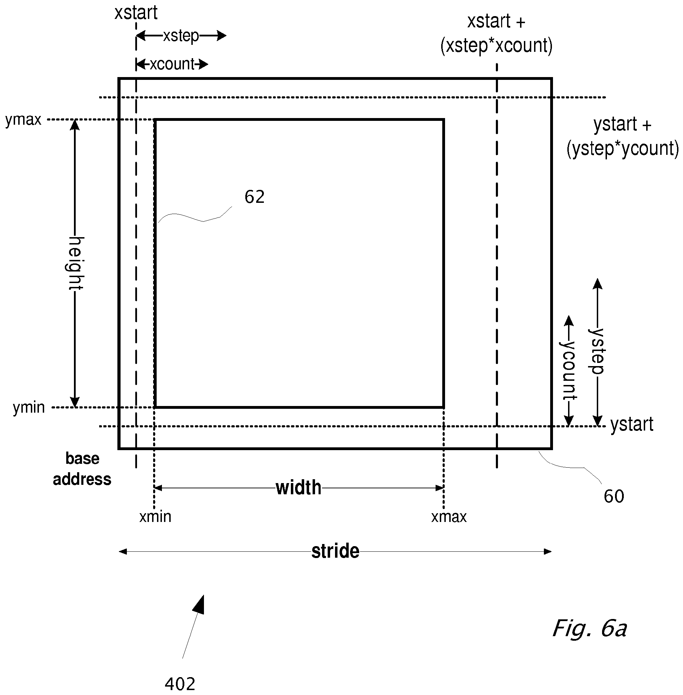

Reference is now made to Figure 6a which shows schematically an image frame 60 in memory 402 with a window 62 according to different embodiments of the present invention. The vertical and horizontal dimensions of window 62 are defined by *ymax-ymin (height)* and *xmax-xmin (width)* respectively. Window 62 defines an area of interest within image frame 60. Image frame 60 is typically larger than window 62. Image frame 60 has pixel values which are stored in a *base address.* Using the parameter *width* for example; *width* may be defined as a difference between window 62 and the larger image frame 60 *(stride* is greater than *width).* The difference is relative to the horizontal and vertical pixel co-ordinates of image frame 60 compared to window 62. The difference may be calculated each time window 62 is moved around inside image frame 60. Window 62 is traversed vertically and horizontally according to the values of *ystep/ ystart/ ycount* and *xstep/ xstart/ xcount* respectively.

By way of example only, the following equation may be used by address generator 408 to iteratively map image coordinates *X, Y* of one or more image frames into memory addresses, according to an embodiment of the present invention.

$$Next\ Address = Base + X + Y*Width. \qquad Eq.\ 1$$

Where *X* is a pixel number per row related to a horizontal coordinate in image coordinates of an image frame. *Y* is the number of rows related to a vertical coordinate in image coordinates of the image frame. *X, Y* may be equivalently defined in terms of the memory addresses storing the image frame with certain assumptions, for instance one byte per pixel intensity datum.) *Width* is the number of memory addresses storing a row in an image frame or the difference between the respective first addresses storing consecutive rows. *Base* is a pointer or memory address in memory 402 for the first memory address for one or more image frames in memory 402. The value of the *Base* pointer is a constant term added to all addresses generated through the iterations of *X* and *Y.* Multiple values of *Base* allow for generation of addresses for multiple image frames stored in memory 402.

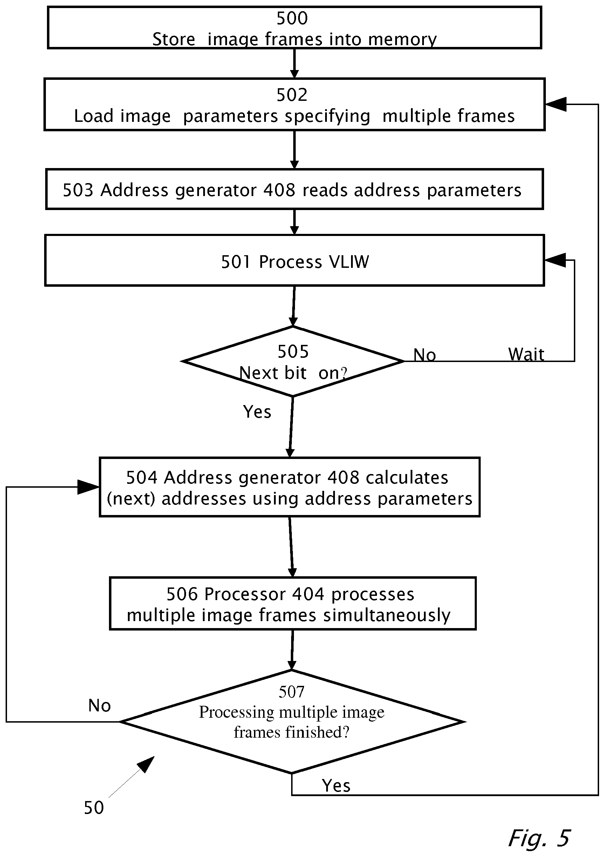

Reference is now also made to Figure 5 which illustrates a flow diagram of a method 50 using image processing system 40 according to an exemplary embodiment of the present invention. Multiple image frames 15 are stored (step 500) typically contiguously in memory 402 via image frame bus 410. At least two of stored multiple image frames 15 are to be processed simultaneously and/or in parallel. Address parameters are loaded (step 502) by a load storage unit of scalar processor 418 in a dedicated register of address generator 408 or in register 406. Address generator 408 reads (step 503) the address parameters. VLIW is processed (step 501) One or more of the address parameters typically specifies the multiple image frames to be processed in parallel. If single bit labeled 1b in VLIW 422 of system 40 (Figure 4) is on, (either "1" or "0") (decision block 505), then address generator 408 calculates (step 504) addresses required by scalar processor 418 over the multiple image frames. Otherwise, in decision block 505, address generator 408 waits for bit 1b to turn on. Processor 404 performs image processing on the multiple image frames 15 simultaneously (step 506) without frame-by-frame calculation of addresses because the required addresses for the multiple image frames have been previously calculated by address generator **408** for all the multiple frames to be processed (step **506**). Calculation (step **504**) of addresses may be performed while image frames **15** are being stored (step **502**) in memory. During processing (step **506**), bit **1b** of VLIW is typically turned off. When processor **404** has completed processing the calculated addresses for only respective portions of all the image frames to be processed and the processing over entire image frames is not finished (decision block **507**), then bit **1b** of VLIW is typically turned on and process **50** feeds back to step **504** during which address generator **408** calculates the next portions of addresses of the multiple image frames using the same image parameters already loaded in step **502**. When in decision box **507** processing of all the addresses of the multiple image frames is completed then process **50** may continue with loading (step **502**) new image parameters.

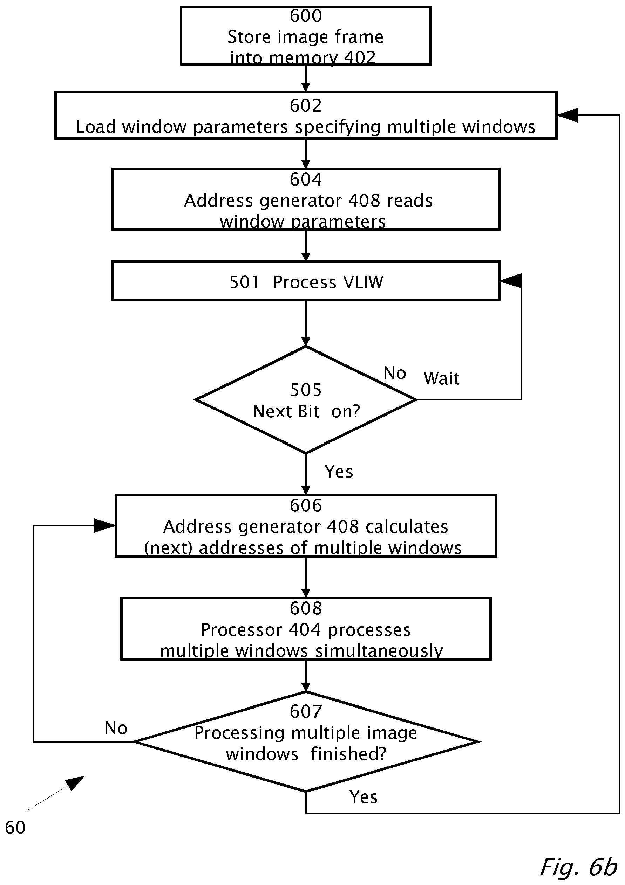

Reference is now also made to Figure 6b which illustrates a flow chart of another method using image processing system **40,** according to an exemplary embodiment of the present invention. An image frame **15** is stored (step **600**). Register **406** or a dedicated register in address generator **408** is loaded (step **602**) with window parameters specifying multiple windows by scalar processor **418**. Address generator **408** reads (step **604**) the window parameters loaded in step **602**. VLIW is processed (step **501**).

During processing (step **606**), bit **1b** of VLIW is typically turned off. When processor **404** has completed processing the calculated addresses for only respective portions of all the windows to be processed and the processing over entire windows is not finished (decision block **607**), then bit **1b** of VLIW is typically turned on and process **60** feeds back to step **606** during which address generator **408** calculates the next portions of addresses of the multiple windows using the same image parameters already loaded in step **602**. When in decision box **607** processing of all the addresses in the multiple windows is completed then process **60** may continue with loading (step **602**) new image parameters.

Address generator **408** calculates (step **606**) the addresses of the multiple windows required by scalar processor **418**. Vector processor **404** performs image processing on the multiple windows simultaneously (step **608**) without calculating addresses window-by-window because the addresses for multiple windows required have been previously calculated by address generator **408.**

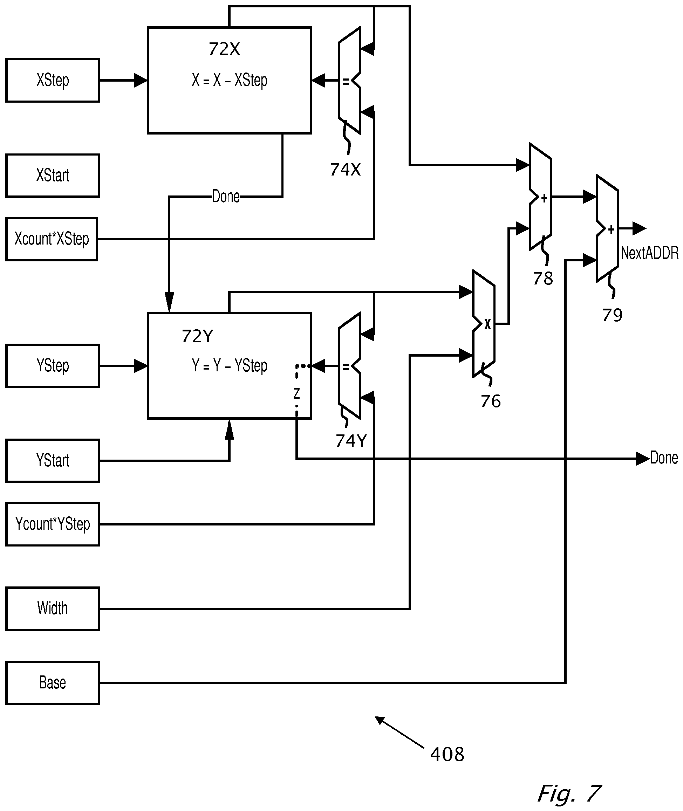

Reference is now made to Figure 7 which illustrates a simplified block diagram of address generator **408** which calculates addresses according to Equation 1 above. A counter **72X** is used to iterate in the horizontal direction in image coordinates, $X=X+XStep$. $XStart$ is the first value of X, which is then incremented $XCount$ times by the value of $XStep$. $X$ is set to $XStart$ each time a new $X$ iteration is started. $XStep$ is the value by which $X$ is incremented at each $X$ iteration, thus allowing accesses to skip over pixels. $XCount$ is the number of iterations in the X image coordinate, i.e. $X$ is incremented $XCount$ times as determined by comparator **74X.**

A counter **72Y** is used to iterate in the vertical direction in image coordinates, $Y=Y+YStep$. $YStart$ is the first value of Y, which is then incremented $YCount$ times by the value of $YStep$. $Y$ is set to $YStart$ each time a new $Y$ iteration is started. $YStep$ is the value by which $Y$ is incremented at each $Y$ iteration, thus allowing accesses to skip over rows of pixels. $YCount$ is the number of iterations in the Y image coordinate, i.e. $Y$ is incremented_$YCount$ times as determined by comparator **74Y.**

Multiplication of the number of memory addresses storing a row, $Width$, by the number of rows $Y$, is performed by multiplier **76**. The product as output of multiplier **76** is added to $X$ by an adder **78.** The next address $NextAddr$ calculated is found by adding the base address $Base$ to the sum from adder **78.**

For processing two or more image frames of the same size, equation 1 may still be used by having the $Base$ value employ an image number $N_i$ multiplied by the memory size $S_m$.

$$Base_i = N_i * S_m$$

Thus, $Base_i$ is used to reach the start of every desired frame, which is then traversed according to equation 1.

Thus, the feature for generating addresses over multiple image frames may be referred to herein as generating addresses over a third dimension or a z- dimension.

Pipeline Delay Register

Address generator unit **408** may be designed to provide addresses required by scalar processor **418** based on the image parameters loaded. For a given image, address generator **408** cycles through the x,y,z dimensions and an instruction sequence programmed for the specific coordinate is executed.

As an example the following operation is performed. For corresponding pixels in two distinct image frames, the intensity value of the pixels are subtracted and the result is stored.

This operation requires two loads, one subtract, and one store (four operations in total). The operations are executed in pipeline and parallel fashion such that it takes four cycles until the store is executed, subsequently, however, a new result is stored every cycle. In order to account for this pipeline delay, a register is provided in register block **406** to indicate to address generator **408** not to execute the store until a delay has been met.

Non-Aligned Data Handling

Another salient feature of address generator **408** is the ability to efficiently handle non-aligned data. In a typical 8-bit pixel image processing system, pixel data is stored in memory that is not 8-bits wide, but rather has a bus width of 32 or 64 bits. (There are two reasons for using wide buses: (1) Very long instruction word (VLIW) digital signal processing units (DSP) handle multiple pairs of inputs in parallel, and thus the system should be capable of supplying multiple pixels (*e.g.*, 8 pixels = 64bit memory accesses) to maintain the units in full operation. (2) Furthermore, by increasing the width of the system bus this correspondingly reduces the number of access cycles needed to DMA images into local memory.) Statistically, the desired image patch is not aligned to the system bus width. There are one or more "undesired" pixels in the memory word read before the first valid pixels in the first row. The same is true of the row end; the last valid memory word is read followed by a number of undesired pixels.

Thus, any processing should eliminate, ignore, or mask out the undesired pixels read in the first and last memory words of every row processed and should also ensure that invalid data is not written back to memory. Address generator **408** includes or accesses two programmable registers which may be used to determine where the valid pixel boundaries are within the initial and final memory words of a given row.

For memory reads, address generator **408** may zero out the invalid data bits which allows the ALUs **420** to process the entire memory word without any influence to the calculation results. (In general, zero data does not influence algorithms involving addition and multiplication, except in special cases for which software would then have to take this into account). For memory writes, the address generator **408** may disable the Byte Enable lines corresponding to the invalid bytes.

Flow Control

In a standard processor there is a program counter which points to the next instruction to execute; usually the next memory location in program memory, unless there is a programmed branch instruction which then forces the program counter to the program memory location pointed to by the branch instruction. The processor loads the new address from the BRA instruction. Furthermore, the processor determines if the loop has completed. Hence conventional flow control requires computing resources and clock cycles.

In contrast, system **40** includes hardware to support looping code thereby eliminating overhead associated with supporting loops. The system contains registers (for instance in register block **406**) which point to the beginning of a loop and the end of the loop such that once the loop has been entered it will continuously execute autonomously forever (i.e., going from beginning to end and back to the beginning without intervention). In order to break the "infinite loop" the circuitry accepts an external "break" signal generated from address generator **408** which has been preprogrammed with the parameters of the loop (e.g., x,y max). In this way, processor resources are not wasted on handling the loop flow control.

The definite articles "a", "an" are used herein, such as "an image parameter", "an address generator", "a register", "a processor" have the meaning of "one or more" that is "one or more image parameters", "one or more address generators " "one or more registers" or "one or more processors".

Examples of various features/aspects/components/operations have been provided to facilitate understanding of the disclosed embodiments of the present invention. In addition, various preferences have been discussed to facilitate understanding of the disclosed embodiments of the present invention. It is to be understood that all examples and preferences disclosed herein are intended to be non-limiting.

**Claims**

1.    An image processing system (40) including:

> a vector processor (404) that comprises multiple arithmetic logic units (420), an address generator (408) and a scalar processor (418); and
> a memory (402) operable for operatively attaching to said vector processor (404),
> wherein said memory (402) is operable to store multiple image windows (15) to be processed in parallel;
> wherein the address generator (408) is operatively attached to said memory (402) to access said memory (402);
> wherein the image processing system (40) is **characterized by** having a register (406) adapted to store image parameters that specify the multiple image windows (15) to be processed in parallel;
> wherein the image processing system (40) is operable to store a very long instruction word (VLIW) instruction that includes operation codes for image processing calculations over the image windows (15) by the multiple arithmetic logic units (420);

wherein said VLIW instruction is configured to transfer only: (i) operation codes for image processing calculations over said image windows (15) by at least one ALU unit (420) of the multiple arithmetic logic units (420), and (ii) a single bit (1b) to said address generator (408) to enable the calculation of addresses by said address generator (408);

wherein the address generator (408) is configured to be loaded with window parameters specifying multiple windows by said scalar processor (418);

wherein the vector processor (404) is operable to process in parallel the multiple image windows (15) based on the addresses of the multiple image windows (15) and based on the operation codes of the VLIW instruction.

2. The image processing system (40) according to claim 1 wherein the address generator (408) is operable to calculate the addresses when the single bit (1b) of said VLIW instruction is on and to wait before calculating the addresses when the single bit (1b) is off.

3. The image processing system (40) according to claim 1 wherein the image parameters point to a beginning of an execution loop and to the end of the execution loop; wherein the vector processor (404) includes hardware to support looping code during execution of the execution loop, and based on a region of interest in said image windows (15), said address generator (408) is configured to generate a break signal to be received by said hardware to break the execution of said looping code of the vector processor (404) over the image windows (15).

4. The image processing system (40) according to any preceding claim, wherein said addresses are calculated over said multiple image windows (15) based upon at most one image size parameter which specifies a dimension of said image windows (15).

5. The image processing system (40) according to any of claims 1 to 3, wherein said addresses are calculated over said multiple image windows (15) based upon at most two image size parameters which specify a dimension of said image windows (15).

6. A method of processing images in a system (40) including a register (406), a vector processor (404) and a memory (402), wherein the vector processor (404) includes an address generator (408), multiple arithmetic logic units (420) and a scalar processor (418); the method including the steps of:

storing multiple image windows (15) to be processed in parallel in the memory (402); and
accessing the memory (402) by the address generator (408);
wherein the method is **characterized by** storing (a) image parameters that specify the multiple image windows to be processed in parallel, and (b) a very long instruction word (VLIW) instruction that includes operation codes for image processing calculations over the image windows by the multiple arithmetic logic units; wherein said VLIW instruction is configured to transfer only: (i) operation codes for image processing calculations over said image windows (15) by at least one ALU unit (420) of the multiple arithmetic logic units (420), and (ii) a single bit (1b) to said address generator to enable the calculation of addresses by said address generator (408);
loading window parameters specifying multiple windows by said scalar processor (418) to said address generator (408); and
processing in parallel and by vector processor (404), the multiple image windows based on the addresses of the multiple image windows and based on the operation codes of the VLIW instruction.

7. The method according to claim 6 comprising calculating by the address generator (408) the addresses when the bit (1b) is on and waiting before calculating the addresses when the bit is off.

8. The method according to claim 7, wherein the loading of said image parameters is performed externally to said VLIW instruction.

9. The method according to claim 6 wherein the image parameters point to a beginning of an execution loop and to the end of the execution loop; wherein the vector processor (404) includes hardware to support looping code during execution of the execution loop, wherein the method comprises generating, based on a region of interest in said image windows (15), by the address generator (408), a break signal to be received by said hardware to break the execution of said looping code of the vector processor (404) over the image windows (15).

10. The method according to any one of claims 7 to 9, wherein said calculating is based upon said parameters including at most one image size parameters which specify the size of said image windows (15).

**11.** The method according to any one of claims 7 to 9, wherein said calculating is based upon said parameters including at most two image size parameters which specify the size of said image windows (15).

**Patentansprüche**

1. Bildverarbeitungssystem (40) mit:

   einem Vektorprozessor (404), der mehrere arithmetische logische Einheiten (420), einen Adressgenerator (408) und einen Skalarprozessor (418) aufweist; und
   einem Speicher (402), der zum operativen Anschließen an den Vektorprozessor (404) betreibbar ist, wobei der Speicher (402) zum Speichern mehrerer Bildfenster (15) betreibbar ist, die parallel verarbeitet werden sollen; wobei der Adressgenerator (408) operativ an den Speicher (402) angeschlossen ist, um auf den Speicher (402) zuzugreifen;
   wobei das Bildverarbeitungssystem (40) **dadurch gekennzeichnet ist, dass** es ein Register (406) aufweist, das geeignet ist, um Bildparameter zu speichern, die die mehreren Bildfenster (15) spezifizieren, die parallel verarbeitet werden sollen;
   wobei das Bildverarbeitungssystem (40) betreibbar ist, um eine Instruktion als sehr langes Instruktionswort (VLIW) zu speichern, die Operationscodes für Bildverarbeitungsberechnungen über die Bildfenster (15) durch die mehreren arithmetischen Logikeinheiten (420) beinhaltet;
   wobei die VLIW Instruktion konfiguriert ist, um nur zu übertragen: (i) Betriebscodes für Bildverarbeitungsberechnungen über die Bildfenster (15) durch mindestens eine ALU-Einheit (420) der mehreren arithmetischen Logikeinheiten (420), und (ii) ein einzelnes Bit (1b) zum Adressgenerator (408), um die Berechnung von Adressen durch den Adressgenerator (408) zu ermöglichen;
   wobei der Adressgenerator (408) konfiguriert ist, um mit Fensterparametern geladen zu werden, die mehrere Fenster durch den Skalarprozessor (418) spezifizieren;
   wobei der Vektorprozessor (404) betreibbar ist, um die mehreren Bildfenster (15) parallel zu verarbeiten, basierend auf den Adressen der mehreren Bildfenster (15) und basierend auf den Betriebscodes der VLIW Instruktion.

2. Bildverarbeitungssystem (40) nach Anspruch 1, wobei der Adressgenerator (408) betreibbar ist, um die Adressen zu berechnen, wenn das einzelne Bit (1b) der VLIW Instruktion ein ist, und um zu warten, bevor die Adressen berechnet werden, wenn das einzelne Bit (1b) aus ist.

3. Bildverarbeitungssystem (40) nach Anspruch 1, wobei die Bildparameter auf einen Anfang einer Execution Loop und auf das Ende der Execution Loop zeigen; wobei der Vektorprozessor (404) Hardware umfasst, um einen Looping Code während der Ausführung der Execution Loop zu unterstützen, und wobei basierend auf einem Bereich von Interesse in den Bildfenstern (15) der Adressgenerator (408) konfiguriert ist, um ein von der Hardware zu empfangendes Unterbrechungssignal zu erzeugen, um die Ausführung des Looping Codes des Vektorprozessors (404) über die Bildfenster (15) zu unterbrechen.

4. Bildverarbeitungssystem (40) nach irgendeinem vorhergehenden Anspruch, wobei die Adressen über die mehreren Bildfenster (15) basierend auf höchstens einem Bildgrößenparameter berechnet werden, der eine Dimension der Bildfenster (15) spezifiziert.

5. Bildverarbeitungssystem (40) nach einem der Ansprüche 1 bis 3, wobei die Adressen über die mehreren Bildfenster (15) basierend auf höchstens zwei Bildgrößenparametern berechnet werden, die eine Dimension der Bildfenster (15) spezifizieren.

6. Verfahren zum Verarbeiten von Bildern in einem System (40), das ein Register (406), einen Vektorprozessor (404) und einen Speicher (402) umfasst, wobei der Vektorprozessor (404) einen Adressgenerator (408), mehrere arithmetische Logikeinheiten (420) und einen Skalarprozessor (418) umfasst; wobei das Verfahren die folgenden Schritte umfasst:

   Speichern mehrerer Bildfenster (15), die parallel in dem Speicher (402) verarbeitet werden sollen; und
   Zugreifen auf den Speicher (402) durch den Adressgenerator (408);
   wobei das Verfahren **gekennzeichnet ist durch** das Speichern von (a) Bildparametern, die die parallel zu verarbeitenden mehreren Bildfenster spezifizieren, und (b) einer Instruktion als sehr langes Instruktionswort (VLIW), die Operationscodes für Bildverarbeitungsberechnungen über die Bildfenster durch die mehreren arithmetischen Logikeinheiten umfasst; wobei die VLIW Instruktion konfiguriert ist, nur zu übertragen: (i) Betriebscodes für Bildverarbeitungsberechnungen über die Bildfenster (15) durch mindestens eine ALU-Einheit (420) der mehreren arithmetischen Logikeinheiten (420) und (ii) ein einzelnes Bit (1b) zu dem Adressgenerator, um die Berechnung von Adressen durch den Adressgenerator (408) zu ermöglichen;
Laden von Fensterparametern, die mehrere Fenster durch den Skalarprozessor (418) spezifizieren, in den Adressgenerator (408); und
Verarbeiten parallel und durch einen Vektorprozessor (404) die mehreren Bildfenster, basierend auf den Adressen der mehreren Bildfenster und auf den Betriebscodes der VLIW Instruktion.

7. Verfahren nach Anspruch 6, umfassend ein Berechnen der Adressen durch den Adressgenerator (408), wenn das Bit (1b) ein ist, und ein Warten vor dem Berechnen der Adressen, wenn das Bit aus ist.

8. Verfahren nach Anspruch 7, wobei das Laden der Bildparameter extern zu der VLIW Instruktion durchgeführt wird.

9. Verfahren nach Anspruch 6, wobei die Bildparameter auf einen Anfang einer Execution Loop und auf das Ende der Execution Loop zeigen; wobei der Vektorprozessor (404) Hardware beinhaltet, um Looping Code während der Ausführung der Execution Loop zu unterstützen, wobei das Verfahren ein Erzeugen, basierend auf einem Bereich von Interesse in den Bildfenstern (15), durch den Adressgenerator (408) eines von der Hardware zu empfangenden Unterbrechungssignals umfasst, um die Ausführung des Looping Codes des Vektorprozessors (404) über die Bildfenster (15) zu unterbrechen.

10. Verfahren nach einem der Ansprüche 7 bis 9, wobei das Berechnen auf den Parametern basiert, die höchstens einen Bildgrößenparameter umfassen, der die Größe der Bildfenster (15) spezifiziert.

11. Verfahren nach einem der Ansprüche 7 bis 9, wobei das Berechnen auf den Parametern basiert, die höchstens zwei Bildgrößenparameter umfassen, die die Größe der Bildfenster (15) spezifizieren.

## Revendications

1. Système de traitement d'images (40) comprenant :

   un processeur vectoriel (404) qui comprend de multiples unités logiques arithmétiques (420), un générateur d'adresses (408) et un processeur scalaire (418) ; et
   une mémoire (402) conçue pour se fixer de manière fonctionnelle audit processeur vectoriel (404), ladite mémoire (402) étant fonctionnelle pour stocker de multiples fenêtres d'image (15) à traiter en parallèle ;
   le générateur d'adresses (408) étant fixé de manière fonctionnelle à ladite mémoire (402) pour accéder à ladite mémoire (402) ;
   le système de traitement d'images (40) étant **caractérisé par le fait qu'**il possède un registre (406) conçu pour stocker des paramètres d'image qui spécifient les multiples fenêtres d'image (15) à traiter en parallèle ;
   le système de traitement d'images (40) étant fonctionnel pour stocker une instruction à mot d'instruction très long (VLIW) qui comprend des codes d'opération pour des calculs de traitement d'images sur les fenêtres d'image (15) par les multiples unités logiques arithmétiques (420) ;
   ladite instruction VLIW étant configurée pour transférer uniquement : (i) des codes d'opération pour des calculs de traitement d'images sur lesdites fenêtres d'image (15) par au moins une unité ALU (420) des multiples unités logiques arithmétiques (420), et (ii) un bit unique (1b) vers ledit générateur d'adresses (408) pour permettre le calcul d'adresses par ledit générateur d'adresses (408) ;
   le générateur d'adresses (408) étant configuré pour être chargé avec des paramètres de fenêtre spécifiant de multiples fenêtres par ledit processeur scalaire (418) ;
   le processeur vectoriel (404) étant fonctionnel pour traiter en parallèle les multiples fenêtres d'image (15) sur la base des adresses des multiples fenêtres d'image (15) et sur la base des codes d'opération de l'instruction VLIW.

2. Système de traitement d'images (40) selon la revendication 1, dans lequel le générateur d'adresses (408) est fonctionnel pour calculer les adresses lorsque le bit unique (1b) de ladite instruction VLIW est activé et pour attendre avant le calcul des adresses lorsque le bit unique (1b) est désactivé.

**3.** Système de traitement d'images (40) selon la revendication 1, dans lequel les paramètres d'image pointent vers un début d'une boucle d'exécution et vers la fin de la boucle d'exécution ; le processeur vectoriel (404) comprenant un matériel pour prendre en charge un code de bouclage durant l'exécution de la boucle d'exécution, et sur la base d'une région d'intérêt dans lesdites fenêtres d'image (15), ledit générateur d'adresses (408) étant configuré pour générer un signal d'interruption devant être reçu par ledit matériel pour interrompre l'exécution dudit code de bouclage du processeur vectoriel (404) sur les fenêtres d'image (15).

**4.** Système de traitement d'images (40) selon une quelconque revendication précédente, dans lequel lesdites adresses sont calculées sur lesdites multiples fenêtres d'image (15) sur la base au plus d'un paramètre de taille d'image qui spécifie une dimension desdites fenêtres d'image (15).

**5.** Système de traitement d'images (40) selon l'une quelconque des revendications 1 à 3, dans lequel lesdites adresses sont calculées sur lesdites multiples fenêtres d'image (15) sur la base au plus de deux paramètres de taille d'image qui spécifient une dimension desdites fenêtres d'image (15).

**6.** Procédé de traitement d'images dans un système (40) comprenant un registre (406), un processeur vectoriel (404) et une mémoire (402), le processeur vectoriel (404) comprenant un générateur d'adresses (408), de multiples unités logiques arithmétiques (420) et un processeur scalaire (418) ; le procédé comprenant les étapes consistant à :

> stocker de multiples fenêtres d'image (15) à traiter en parallèle dans la mémoire (402) ; et
> accéder à la mémoire (402) par le générateur d'adresses (408) ;
> le procédé étant **caractérisé par** le stockage (a) de paramètres d'image qui spécifient les multiples fenêtres d'image à traiter en parallèle, et (b) d'une instruction à mot d'instruction très long (VLIW) qui comprend des codes d'opération pour des calculs de traitement d'images sur les fenêtres d'image par les multiples unités logiques arithmétiques ; ladite instruction VLIW étant configurée pour transférer uniquement : (i) des codes d'opération pour des calculs de traitement d'images sur lesdites fenêtres d'image (15) par au moins une unité ALU (420) des multiples unités logiques arithmétiques (420), et (ii) un bit unique (1b) vers ledit générateur d'adresses pour permettre le calcul d'adresses par ledit générateur d'adresses (408) ;
> charger des paramètres de fenêtre spécifiant de multiples fenêtres par ledit processeur scalaire (418) sur ledit générateur d'adresses (408) ; et
> traiter en parallèle, et par le processeur vectoriel (404), les multiples fenêtres d'image sur la base des adresses des multiples fenêtres d'image et sur la base des codes d'opération de l'instruction VLIW.

**7.** Procédé selon la revendication 6, comprenant le calcul, par le générateur d'adresses (408), des adresses lorsque le bit (1b) est activé et l'attente avant le calcul des adresses lorsque le bit est désactivé.

**8.** Procédé selon la revendication 7, dans lequel le chargement desdits paramètres d'image est réalisé de manière externe à ladite instruction VLIW.

**9.** Procédé selon la revendication 6, dans lequel les paramètres d'image pointent vers un début d'une boucle d'exécution et vers la fin de la boucle d'exécution ; le processeur vectoriel (404) comprenant un matériel pour prendre en charge un code de bouclage durant l'exécution de la boucle d'exécution, le procédé comprenant la génération, sur la base d'une région d'intérêt dans lesdites fenêtres d'image (15), par le générateur d'adresses (408), d'un signal d'interruption devant être reçu par ledit matériel pour interrompre l'exécution dudit code de bouclage du processeur vectoriel (404) sur les fenêtre d'image (15).

**10.** Procédé selon l'une quelconque des revendications 7 à 9, dans lequel ledit calcul est basé sur lesdits paramètres comprenant au plus un paramètre de taille d'image qui spécifie la taille desdites fenêtres d'image (15).

**11.** Procédé selon l'une quelconque des revendications 7 à 9, dans lequel ledit calcul est basé sur lesdits paramètres comprenant au plus deux paramètres de taille d'image qui spécifient la taille desdites fenêtres d'image (15).

12

18

*Fig. 1 Conventional Art*

*Fig. 2 Conventional Art*     16

*Fig. 3 Conventional Art*

Fig. 4

Fig. 5

*Fig. 6a*

Fig. 6b

*Fig. 7*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7113867 B
- US 20080137908 A
- US 11951405 B
- US 7566851 B
- US 8254635 B2
- WO 2008050256 A

**Non-patent literature cited in the description**

- A loop accelerator for low power embedded VLIW processors. **MATHEW B et al.** HARDWARE/SOFTWARE CODESIGN AND SYSTEM SYNTHESIS, INTERNATIONAL CONFERENCE ON. IEEE, 08 September 2004, 6-11